(19) Europäisches Patentamt / European Patent Office / Office européen des brevets

(11) **EP 2 533 082 B1**

(12) **EUROPEAN PATENT SPECIFICATION**

(45) Date of publication and mention
of the grant of the patent:
**25.12.2013 Bulletin 2013/52**

(51) Int Cl.:
***G02B 6/036*** (2006.01)

(21) Application number: **11305726.9**

(22) Date of filing: **09.06.2011**

(54) **Single mode optical fiber**

Singlemode-glasfaser

Fibre optique monomodale

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.12.2012 Bulletin 2012/50**

(73) Proprietor: **Draka Comteq BV
1083 HJ Amsterdam (NL)**

(72) Inventors:
• **Bigot-Astruc, Marianne
91460 MARCOUSSIS (FR)**

• **Sillard, Pierre
78150 LE CHESNAY (FR)**

(74) Representative: **Algemeen Octrooi- en
Merkenbureau B.V.
P.O. Box 645
5600 AP Eindhoven (NL)**

(56) References cited:
**EP-A1- 2 312 350     WO-A1-2010/003856**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention concerns the field of optical fiber transmissions, and more specifically single mode optical fibers (SMF). The invention relates to a single mode optical fiber with having reduced attenuation and to a method for manufacturing such a fiber with increased capacity.

For optical fibres, the index profile is generally classified according to the appearance of the graph of the function which associates the refractive index with the radius of the fibre. In standard fashion, the distance r to the centre of the fibre is shown on the x-axis, and on the y-axis, the difference between the refractive index and the refractive index of the fibre cladding. These curves are generally representative of the theoretical or set profile of the fibre, whilst the manufacturing constraints of the fibre may result in a slightly different profile. An optical fiber conventionally consists of an optical core, whose function is to transmit and possibly to amplify an optical signal, and of an optical cladding whose function is to confine the optical signal within the core. For this purpose, the refractive indexes of the core $n_c$ and of the outer cladding $n_g$ are such that $n_c > n_g$.

Step-index fibres, also called SMF ("Single Mode Fibres") are typically used as line fibres for optical fibre transmission systems. These fibres have a chromatic dispersion and a chromatic dispersion slope complying with specific telecommunications standards as well as standardized cut-off wavelength and effective area values.

In response to the need for compatibility between optical systems from different manufacturers, the International Telecommunication Union (ITU) has defined a standard, reference ITU-T G.652, with which a standard optical transmission fibre, called SSMF (Standard Single Mode Fibre), must comply.

Among others, the G.652 standard recommends for a transmission fibre the range [8.6; 9.5 $\mu$m] for the Mode Field Diameter (MFD) at a wavelength of 1310 nm; a maximum of 1260 nm for the value of the cable cut-off wavelength; the range [1300; 1324 nm] for the value of the zero dispersion wavelength, denoted $\lambda_0$; a maximum of 0.092 ps/nm²-km for the value of the chromatic dispersion slope. In standard fashion, the cable cut-off wavelength is measured as the wavelength at which the optical signal is no longer single mode after propagation over twenty-two metres of fibre, as defined by subcommittee 86A of the International Electrotechnical Commission in the standard IEC 60793-1-44.

International Telecommunication Union (ITU) has defined further standards relating to various applications of fibers. ITU-T G.654.B standard notably recommends a cable cut-off wavelength $\lambda_{cc}$ less than 1530 nm, a mode diameter between 9.5 $\mu$m and 13.0$\mu$m at 1550 nm, a chromatic dispersion less than 22 ps/nm-km and a dispersion slope less than 0.070 ps/nm²-km at 1550 nm, and bend losses of less than 0.5 dB for 100 turns at 1625 nm for a radius of curvature of 30 mm. ITU-T G.654.C standard notably recommends a cable cut-off wavelength $\lambda_{cc}$ less than 1530 nm, a mode diameter between 9.5 $\mu$m and 10.5$\mu$m at 1550 nm, a chromatic dispersion less than 20 ps/nm-km and a dispersion slope less than 0.070 ps/nm²-km at 1550 nm, and bend losses of less than 0.5 dB for 100 turns at 1625 nm for a radius of curvature of 30 mm.

Fibers with pure silica cores are also known, and are called Pure Silica Core Fibers (PSCFs). The absence of dopant in the core of a PSCF makes it possible to limit optical losses and notably the attenuation at a wavelength of 1550 nm. A PSCF therefore conventionally has a cladding in silica doped with fluorine to reduce its refractive index.

In a known way *per se,* an optical fiber is made by drawing a preform on a fiber-drawing tower. A preform for example comprises a primary preform consisting of a very high quality glass tube making up a portion of the cladding and core of the fiber. This primary preform is then over cladded or sleeved in order to increase its diameter and to form a preform which may be used on a fiber-drawing tower. The scaled fiber-drawing operation consists of placing the preform vertically in a tower and of drawing a fiber strand from the end of the preform. For this, a high temperature is locally applied at one end of the preform until the silica is softened; the fiber-drawing rate and the temperature are then permanently monitored during the fiber drawing as they determine the diameter of the fiber. The geometry of the preform should perfectly observe the ratios of the refractive indexes and of the core and cladding diameters of the fiber so that the drawn fiber has the required profile.

The primary preform may consist of a substrate tube, generally in quartz, in which one or more layers of doped and/or undoped silica have been deposited to form the core and an inner cladding of the fiber. Deposition techniques inside a substrate tube include MCVD (Modified Chemical Vapor Deposition), FCVD (Furnace Chemical Vapor Deposition) or PCVD (Plasma Chemical Vapor Deposition). After depositing the layers corresponding to the core and the inner cladding, the tube is closed onto itself during an operation called collapsing.

Component deposition is commonly referred to by the expression "doping", i.e., "dopants" are added to the silica in order to change its refractive index. Thus, germanium (Ge) or phosphorus (P) increases the refractive index of silica; they are often used for doping the central core of the fiber. Moreover, fluorine (F) or boron (B) lowers the refractive index of silica; fluorine is often used for forming depressed claddings.

Making a primary preform with a highly and large depressed cladding is delicate. Indeed, fluorine for instance is poorly incorporated in heated silica beyond a certain temperature whereas a high temperature is required for making glass. PCVD technique can be efficiently used to produce depressed cladding inside a deposition tube. Such a manufacturing technique is described in documents US RE 30,635 and US 4,314,833; it allows fluorine to be significantly incorporated into silica in order to form highly depressed claddings. A deposition tube, made of silica either pure or doped with fluorine, is provided and mounted in a glasswork tower. The tube is then set into rotation and a gas mixture of silica and dopants is injected into the tube. The tube crosses a microwave cavity in which the gas mixture is heated locally. The microwave heating generates plasma by ionization of the gases injected into the tube and the ionized dopants highly react with the silica particles, causing deposition of doped silica layers inside the tube. The high reactivity of the dopants, generated by the microwave heating, enables a high concentration of dopants to be incorporated into the silica layers.

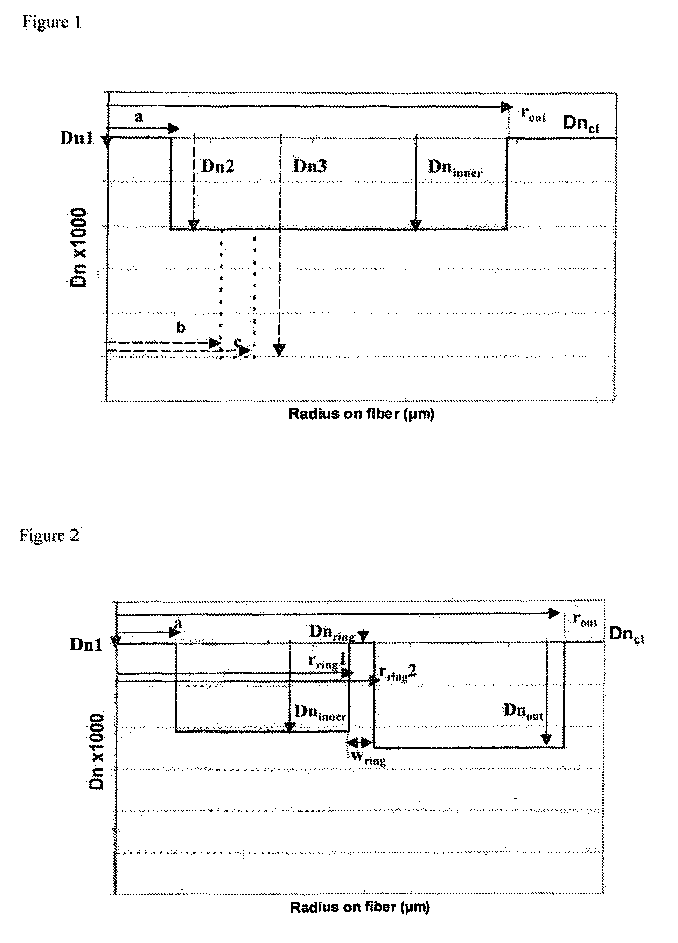

Figure 1 illustrates a set index profile of a conventional PSCF. The index profile of figure 1 shows a central core of radius $a$ and of index $Dn_1$ corresponding to the index of silica, and a depressed cladding of outer radius $r_{out}$ and of index $Dn_{inner}$. The expression "depressed cladding" is used since the refractive index $Dn_{inner}$ is less than that of the outer cladding $Dn_{cl}$ obtained by over cladding or sleeving of the primary preform. This outer cladding is generally of pure silica glass and has substantially the same refractive index as the central core in a PSCF. Typically, the core and the inner cladding are made by deposition inside a substrate tube and the outer cladding is made of the substrate tube used for making the primary preform and of the over clad or sleeve used to reach to requested diameter ratio.

In the above-described structure, with an outer cladding having substantially the same refractive index as the central core, the fundamental mode LP01 is not completely guided and shows additional losses, called leakage. To minimize these leakage losses, the percentage of energy propagating in the outer pure silica cladding must be reduced. The ratio between the outer radius of the fluorine-doped inner cladding and the radius of the core ($r_{out}/a$) must therefore be sufficiently high; i.e. the inner depressed cladding silica must be extended at least as far as a critical radius $r_{out}$ whose value is dependent on the core radius and on the index difference between the core index $Dn_1$ and the index of the inner cladding $Dn_{cl1}$; for a SMF it is considered that a ratio between the radius of the depressed cladding and the radius of the core that is 8 or more ($r_{out}/a > 8$) ensures good confinement of the optical signal in the central core and an acceptable level of leakage losses.

EP-A-2 312 350 proposes to provide a trench in the depressed cladding in order to limit the leakage losses of the LP01 mode and allow the substrate tube closer to the central core. This solution is illustrated in figure 1 in dot lines. A trench of inner radius $b$ and of outer radius $c$ and index $Dn_3$ is provided within the depressed cladding. The depressed cladding then has a first portion adjacent to the core having an outer radius $b$ and an index $Dn_2$ and a second portion adjacent to the substrate tube having an inner radius $c$ and an index $Dn_{inner}$. But the inner radius of the substrate tube $r_{out}$ cannot be easily reduced below $30\mu m$ on fiber without penalizing propagation characteristics.

MCVD, FCVD and PCVD techniques are satisfactory to obtain good quality core and highly depressed large inner cladding but is costly whenever large capacity preforms are sought. Notably, use of CVD techniques makes it possible to limit attenuation and notably the attenuation at 1383 nm due to the OH peak.

Capacity of a preform is defined as the quantity of optical fiber length which can be drawn from this preform. The greater the diameter of the preform is, the greater this capacity. To reduce manufacturing costs, it is desirable to provide long lengths of linear fiber drawn from one same preform. It is therefore sought to fabricate preforms of large diameter while complying with the above-mentioned constraints regarding the diameters of the central core and the depressed inner cladding.

US-A-2008/0031582 or US-A-5 044 724 discloses using a fluorine-doped deposition tube to make the primary preform. This solution enables to limit the quantity of fluorine-doped layers deposited inside the tube. WO-A-2010/003856 discloses fabrication of fluorine-doped tubes by POD (Plasma Outside Deposition) or OVD.

When a fluorine-doped deposition tube is used, the depressed cladding of the primary preform is composed of the inner deposited cladding and of the tube itself. The ratio between the radius of the depressed cladding and the radius of the core can thereby be increased while limiting the quantity of deposition inside the tube. However, this solution is difficult to master as the deposition conditions change when a fluorine-doped tube is used instead of a non doped silica tube.

US-A-2007/0003198 discloses a hybrid process wherein a rod constituting the Ge-doped core region is made by VAD or OVD and a cladding region is deposited inside a tube by MCVD. The core rod and the MCVD cladding tube are then assembled using a rod-in tube technique. However, the fibers disclosed in this document don't have pure-silica core and show the inherent attenuations issues at 1385 nm linked to the use of VAD or OVD techniques.

EP-A-2 003 476 discloses ring-assisted profiles for which the index of the ring is close to that of the central core. This document teaches that the ring is designed to resonantly couple its modes with the higher-order modes of the central core. Such a fiber profile prevents the central core higher-order modes from propagating and ultimately improves the bend losses of the fundamental mode. These profiles are not optimized for pure-silica core fibers.

The invention aims at reducing the F-doped inner cladding deposited inside the substrate tubes without increasing the leakage losses of the LP01 mode and without deteriorating the other propagation characteristics of the fiber.

This object is achieved with a single mode optical fiber comprising from center to periphery a core, an inner depressed cladding, a ring, an outer depressed cladding and an outer cladding, wherein

- the core has a radius and an index difference with outer cladding comprised between $-0.5.10^{-3}$ and $0.5.10^{-3}$;
- the inner depressed cladding has a radius and an index difference with outer cladding ;
- the ring has an inner radius comprised between 21 $\mu$m and 35 $\mu$m, preferably between 24 $\mu$m and 35 $\mu$m, an outer radius and an index difference with the outer cladding comprised between $-0.5.10^{-3}$ and $0.5.10^{-3}$;
- the outer depressed cladding has a radius and an index difference with outer cladding ; and
- a ratio of the volume of the core over the width of the ring is comprised between 0.12$\mu$m and 0.2 $\mu$m;
- the outer depressed cladding has a volume comprised between 15 $\mu$m$^2$ and 30 $\mu$m$^2$.

According to embodiments, the fiber of the invention may have one or more of the following:

- the core has a radius comprised between 3.5 $\mu$m and 7.5 $\mu$m ;
- the inner depressed cladding has an index difference with outer cladding comprised between $-6.10^{-3}$ and $-2.7.10^{-3}$ ;
- the outer depressed cladding has an index difference with outer cladding comprised between $-6.10^{-3}$ and $-2.10^{-3}$ ;
- the outer depressed cladding has an index difference with inner depressed cladding comprised between $-2.10^{-3}$ and $2.10^{-3}$ ;
- a ratio of the inner radius of the ring versus the radius of the core is comprised between 2.5 and 8 ;
- the outer depressed cladding has a volume comprised between 17 $\mu$m$^2$ and 25 $\mu$m$^2$ ;
- the fiber further comprises a trench provided in the inner depressed inner cladding, said trench having an index difference with the outer cladding, an inner radius and an outer radius being less than the radius of the inner depressed cladding ;
- the core and/or the ring is made of pure silica;
- leakage losses being less than 0.005 dB/km at 1550nm ;
- cable cut-off wavelength being less than 1550 nm, preferably less than 1530 nm, more preferably less than 1260 nm ;
- bend losses at 10 mm radius of less than 5 dB/m at 1550 nm and less than 10 dB/m at 1625 nm ;

The invention also relates to a method for manufacturing an optical fiber according to the invention, the method comprising the steps of:

- providing a deposition tube;
- performing deposition of layers inside the deposition tube to constitute the core and the inner depressed cladding, the deposition tube constituting the ring;
- providing the second depressed cladding ;
- providing the outer cladding, thereby providing an optical preform;
- drawing the fiber by heating a first end of the preform.

According to an embodiment, the method further comprises a step of partially removing the deposition tube.

According to an embodiment, the second depressed cladding is made by one of the following: sleeving with a doped tube, over cladding with doped silica, outside deposition with doped silica.

Other characteristics and advantages of the invention will become apparent on reading the following description of embodiments of the invention given as examples and with reference to the appended drawings which show:

- figure 1, already described, a set index profile of a PSCF according to the prior art;
- figure 2, a set index profile of a fiber according to a first embodiment of the invention;
- figure 3, a set index profile of a fiber according to a second embodiment of the invention;
- figure 4, an illustration of a manufacturing method to obtain a fiber of the invention.

The invention relates to a single mode fiber having low transmission losses and that can be manufactured at reduced cost without deteriorating the propagation characteristics.

For this purpose, the invention proposes a fiber having a pure silica core fiber - or a slightly doped silica core - to limit attenuation and notably the attenuation at 1550 nm when Germanium doping is involved. The invention proposes to make the core and an inner depressed cladding by CVD inside a deposition tube to limit attenuation and notably the attenuation at 1383 nm due to the OH peak. An outer depressed cladding is added around the substrate tube that will act as a ring. Such a configuration allows to reduce the width of the depressed inner cladding that is deposited inside the substrate tube and to put this substrate tube much closer to the central core, which yields much lower manufacturing costs. Position and dimension of the ring are carefully chosen such as to minimize the leakage losses of the fundamental LP01 mode (<0.005dB/km), while keeping the leakage losses of the higher-order LP11 mode sufficiently high to ensure a cable cutoff wavelength compliant with G.654. The ring also makes it possible to reduce bend losses while keeping other propagation characteristics unchanged.

Figure 2 illustrates the index profile of a fiber according to the invention. The single mode fiber of the invention comprises, from center to periphery, a core, an inner depressed cladding, a ring, an outer depressed cladding and an outer cladding. The outer cladding has an index $Dn_{cl}$. The outer cladding can be pure - undoped - silica or slightly doped silica.

The core has a radius **a** comprised between 3.5 $\mu$m and 7.5 $\mu$m and an index difference $Dn_1$ with the outer cladding comprised between $-0.5.10^{-3}$ and $0.5.10^{-3}$. The slight doping - or even none doping - of the core ensures limited attenuation at 1550 nm. The index value of the core could result from co-doping to improve hydrogen resistance and notably to reduce the attenuation at 1383nm due to the OH peak.

The inner depressed cladding has a radius $r_{ring1}$ comprised between 21 $\mu$m and 35 $\mu$m - preferably between 24 $\mu$m and 35 $\mu$m - and an index difference $Dn_{inner}$ with the outer cladding $Dn_{cl}$ comprised between $-6.10^{-3}$ and $-2.7.10^{-3}$. The small radius of the inner depressed cladding - as compared with the radius of the inner depressed cladding of the prior art in figure 1 - ensures limited deposition by CVD and cost control. Still, this radius must not be too small otherwise leakage losses are too important. Notably, the ratio of the radius of the inner depressed cladding over the radius of the core ($r_{ring1}/a$) can be comprised between 2.5 and 8, and even preferably between 3.5 and 7 which is less the typical requirements for a SMF ($r_{out}/a$ >8) to ensure good confinement of the optical signal in the central core and acceptable level of leakage losses.

The ring has an inner radius $r_{ring1}$ comprised between 21 $\mu$m and 35 $\mu$m (end of inner depressed cladding), an outer radius $r_{ring2}$ and an index difference $Dn_{ring}$ with the outer cladding $Dn_{cl}$ comprised between $-0.5.10^{-3}$ and $0.5.10^{-3}$.

The outer depressed cladding has an inner radius $r_{ring2}$ (end of ring), an outer radius $r_{out}$ and an index difference $Dnout$ with the outer cladding $Dn_{cl}$ comprised between $-6.10^{-3}$ and $-2.10^{-3}$.

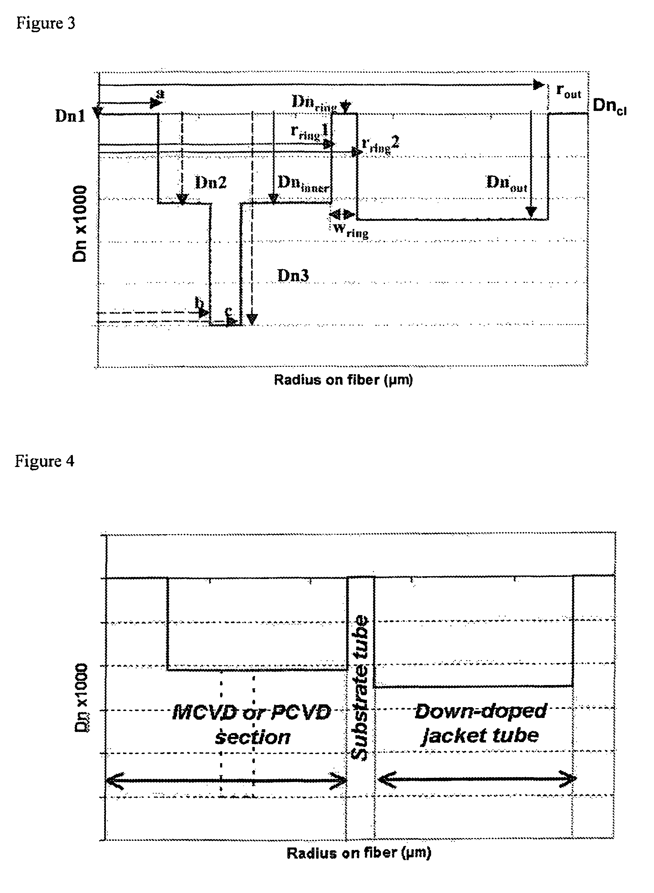

According to an embodiment illustrated in figure 3, a trench can be provided in the inner depressed inner cladding in order to further limit the leakage losses of the LP01 mode. The trench has an inner radius **b** and an outer radius c and an index difference $Dn_3$ with the outer cladding $Dn_{cl}$. The depressed inner cladding then has a first portion adjacent to the core having an outer radius **b** and an index $Dn_2$ and a second portion adjacent to the ring having an inner radius c and an index $Dn_{inner}$.

Position and dimension of the ring are carefully chosen to ensure the best possible trade-off between low leakage losses, low cut-off wavelength and small depressed inner cladding for a given mode field diameter. Position and dimension of the ring can be carefully chosen to ensure that the fiber still complies with most requirements of G. 652 or G.654 standards.

Notably, the ratio of the volume of the core $\left( Vcore = 2\pi \left| \int_0^a Dn(r)\,r\,dr \right| \right)$ over the width of the ring ($w_{ring}= R_{ring2} - R_{ring1}$) is comprised between 0.12 $\mu$m and 0.2 $\mu$m.

Position and dimension of the outer depressed cladding are also carefully chosen to ensure the best possible trade-off between low leakage losses, low cut-off wavelength and small depressed inner cladding for a given mode field diameter. Position and dimension of the ring can be carefully chosen to ensure that the fiber still complies with most requirements of G.652 or G.654 standards.

Notably, the volume of the outer depressed cladding $\left( Vout = 2\pi \left| \int_{rring2}^{rout} Dn(r)\,r\,dr \right| \right)$ is comprised between 15 $\mu$m$^2$ and 30 $\mu$m$^2$, and more preferably between 17 $\mu$m$^2$ and 25 $\mu$m$^2$.

Combined conditions regarding the volume of the outer depressed cladding $V_{out}$ and the ratio of the volume of the core over the width of the ring ($V_{core}/w_{ring}$) ensure that propagation characteristics are not deteriorated, notably that the leakage losses remain less than 0.005dB/km at 1550 nm, the cable cut-off wavelength $\lambda_{cc}$ is less than 1550 nm and the bending losses are kept acceptable. The fiber of the invention fully complies with requirements of G.652 or G.654 standards for mode diameter, chromatic dispersion, dispersion slope and bend losses, whereas the fiber of the invention may stand outside requirements of G.652 or G.654 standards regarding the cable cut-off wavelength $\lambda_{cc}$ which can be slightly more than 1530 nm, up to 1550 nm.

Table I below gives examples of set profiles for fiber according to the invention and comparative examples outside the scope of the invention.

Examples 1, 2, 4, 5, 8, 11 and 12 are according to the invention. Examples 1b, 3, 4b, 6, 7, 8b, 9 and 10 are outside the scope of the invention and given for sake of comparison.

Table I

| Profiles | a (µm) | b (µm) | c (µm) | $r_{ring}1$ (µm) | $r_{ring}2$ (µm) | rout (µm) | Dn1 · $10^{-3}$ | Dn2 · $10^{-3}$ | Dn3 · $10^{-3}$ | $Dn_{inner}$ · $10^{-3}$ | $Dn_{ring}$ · $10^{-3}$ | $Dn_{out}$ · $10^{-3}$ | Wring | $V_{core}/$ Wring (µm) | $V_{out}$ (µm²) |
|---|---|---|---|---|---|---|---|---|---|---|---|---|---|---|---|
| Ex 1 | 4,4 | - | - | 26,1 | 27,9 | 47,8 | 0,0 | - | - | -5,2 | 0,0 | -5,0 | 1,8 | 0,17 | 23,7 |
| Ex 2 | 4,4 | - | - | 29,0 | 31,0 | 47,2 | 0,0 | - | - | -5,2 | 0,0 | -5,0 | 2,0 | 0,15 | 19,9 |
| Ex 3 | 4,4 | - | - | 25,1 | 26,9 | 46,8 | 0,0 | - | - | -5,2 | 0,0 | -10,0 | 1,8 | 0,17 | **46,0** |
| Ex 1b | 4,4 | - | - | - | - | 43,5 | 0,0 | - | - | -5,2 | - | - | - | - | - |
| Ex 4 | 6,1 | 11,2 | 14,4 | 25,1 | 28,1 | 45,8 | 0,0 | -4,2 | 10,0 | -4,2 | 0,0 | -5,0 | 3,0 | 0,16 | 20,6 |
| Ex 5 | 6,1 | 11,2 | 14,4 | 23,7 | 26,3 | 45,8 | 0,0 | -4,2 | 10,0 | -4,2 | 0,0 | -5,0 | 2,6 | 0,19 | 22,2 |
| Ex 6 | 6,1 | 11,2 | 14,4 | 27,3 | 34,3 | 48,6 | 0,0 | -4,2 | 10,0 | -4,2 | 0,0 | -5,0 | 7,0 | **0,07** | 18,6 |
| Ex 7 | 6,1 | 11,2 | 14,4 | 27,3 | 33,3 | 45,1 | 0,0 | -4,2 | 10,0 | -4,2 | 0,0 | -5,0 | 6,0 | **0,08** | **14,5** |
| Ex 4b | 6,1 | 11,2 | 14,4 | - | - | 39,1 | 0,0 | -4,2 | 10,0 | -4,2 | - | - | - | - | - |
| Ex 8 | 5,3 | - | - | 30,4 | 32,7 | 46 | 0,0 | - | - | -4,8 | 0,0 | -4,8 | 2,3 | 0,18 | 15,6 |
| Ex 9 | 5,3 | - | - | 24 | 25,9 | 46 | 0,0 | - | - | -4,8 | 0,0 | -4,8 | 1,9 | **0,42** | 21,6 |
| Ex 8b | 5,3 | - | - | - | - | 42,5 | 0,0 | - | - | -4,8 | - | - | - | - | - |
| Ex 10 | 4,4 | - | - | **19,0** | 21,0 | 47,2 | 0,0 | - | - | -5,2 | 0,0 | -5,0 | 2,0 | 0,15 | 28,1 |
| Ex 11 | 4,4 | - | - | 29,0 | 31,0 | 47,2 | 0,4 | - | - | -4,8 | 0,0 | -5,0 | 2,0 | 0,15 | 19,9 |
| Ex 12 | 5,3 | - | - | 30,4 | 32,7 | 46,0 | -0,4 | - | - | -5,2 | 0,1 | -5,2 | 2,3 | 0,18 | 17,3 |

Table II below presents optical characteristics of the fibers of the examples and comparative example described above.

Table II

| Profiles | LCC (nm) | Leakage loss @1550nm (dB/km) | dispersion @1550nm (ps/nm/km) | slope @1550nm (ps/nm²/km) | Aeff @1550nm (µm²) | 2W02 @1550nm (µm) | BL10mm @1550nm (dB/m) | BL10mm @1625nm (dB/m) |
|---|---|---|---|---|---|---|---|---|
| Ex 1 | 1203 | 0,000 | 16,4 | 0,054 | 82 | 10,3 | 3,0 | 7,9 |
| Ex 2 | 1121 | 0,001 | 16,4 | 0,054 | 82 | 10,3 | 1,4 | 4,5 |
| Ex 3 | >1600 | 0,000 | 16,6 | 0,055 | 82 | 10,3 | <1e-03 | <1e-03 |
| Ex 1b | 1218 | 0,000 | 16,6 | 0,055 | 83 | 10,3 | 6,7 | 24,0 |
| Ex 4 | 1458 | 0,000 | 21,0 | 0,062 | 120 | 12,1 | 0,1 | 0,4 |
| Ex 5 | 1543 | 0,000 | 21,0 | 0,062 | 120 | 12,1 | 0,3 | 0,8 |
| Ex 6 | >1600 | 0,002 | 21,0 | 0,062 | 120 | 12,1 | 0,9 | 1,7 |
| Ex 7 | 1304 | 0,040 | 21,0 | 0,062 | 120 | 12,1 | 0,6 | 1,4 |
| Ex 4b | 1502 | 0,002 | 21 | 0,062 | 120 | 12,1 | 0,6 | 1,4 |
| Ex 8 | <1100 | 0,000 | 19,0 | 0,057 | 101 | 11,2 | 0,7 | 2,4 |
| Ex 9 | 1252 | 0,000 | 19,0 | 0,057 | 101 | 11,2 | 6,2 | 12,1 |
| Ex 8b | 1341 | 0,000 | 19,0 | 0,057 | 101 | 11,2 | 2,1 | 6,3 |
| Ex 10 | 1435 | 0,001 | 16,3 | 0,053 | 82 | 10,3 | 45 | 94 |
| Ex 11 | 1147 | 0,000 | 16,4 | 0,055 | 82 | 10,3 | 1,3 | 4,3 |
| Ex 12 | <1100 | 0,000 | 19,1 | 0,056 | 100 | 11,2 | 0,9 | 2,6 |

It can be seen from table II that most of the fibers of the invention are fully compliant with G.652 or G.654 standards mentioned above.

Notably, examples 1, 2, 4, 5, 8, 11 and 12 which are in the scope of the invention have dispersions below 22 ps/nm/km, dispersion slope less than 0.070 ps/nm$^2$/km, effective areas Aeff of more than 70 $\mu$m$^2$, leakage losses less than 0.005 dB/km and bend losses at 10 mm radius of less than 5 dB/m at 1550 nm and less than 10 dB/m at 1625 nm. Example 5 is within the scope of the invention but shows a cable cut-off wavelength slightly above the requirements of the G.652 or G.654 standards. The fiber of the invention has a cable cut-off wavelength being less than 1550 nm, more preferably less than 1530 nm to comply with G.654 standard, and even more preferably less than 1260 nm to further comply with G.652 standard.

Examples 1b, 3, 4b, 6, 7, 8b, 9 and 10 are outside the scope of the invention and are presented for the sake of comparison.

Example 1b has the same central core and depressed cladding as example 1 (same radius, same Dn1 and Dn$_{inner}$), but without ring. The outer cladding has been positioned to get the best trade-off between leakage losses and deposition section. All propagation characteristics are equivalent to those of example 1, except the bending losses for 10mm radius, which are more than doubled at both 1550 nm and 1625 nm. If we compare to example 1, using the substrate tube as the ring, the deposition section radius is increased by more than 17 $\mu$m yielding to much higher manufacturing costs.

Example 3 has same core dimensions, same ring width and same outer cladding width as those of example 1. But the ring has been put closer to the core. The outer cladding is much more depressed in order to maintain low leakage losses and low bend losses despite a ring closer to the core. But leakage losses of the higher-order modes are also strongly reduced, which induces a strong increase of cable cut-off above 1600 nm. Other propagation characteristics are unchanged.

Example 4b has the same central core and same trench characteristics as those of example 4 (same a, b, c, Dn1, Dn2, Dn3, D$_{inner}$), but without ring. The outer cladding has been positioned to get the best trade-off between leakage losses, cut-off wavelength and deposition section. All propagation characteristics are equivalent to those of example 4. But the deposition section radius is increased by 14 $\mu$m yielding to much higher manufacturing costs.

Example 6 has the same central core and same trench characteristics as those of example 4 (same a, b, c, Dn1, Dn2, Dn3, D$_{inner}$), but the ring dimensions are not optimized. As a consequence, cable cut-off wavelength is strongly increased above 1600 nm.

Example 7 has the same central core and same trench characteristics as those of example 4 (same a, b, c, Dn1, Dn2, Dn3, D$_{inner}$), but the ring and outer cladding dimensions are not optimized. As a consequence, a too large ring combined with a too small outer cladding volume leads to an unacceptable level of leakage losses.

Example 8b has the same central core characteristics as those of example 8 (same radius, same Dn1 and D$_{inner}$), but without ring. The outer cladding has been positioned to get the best trade-off between leakage losses and deposition section. Dispersion, slope and mode field diameter are equivalent to those of example 8. But both bend losses and cable cut-off wavelength are increased. If we compare to example 8, using the substrate tube as ring, the deposition section radius is increased by more than 12 $\mu$m yielding to much higher manufacturing costs.

Example 9 has same refractive index profile as the one of example 8, except the ring, which is thinner and closer to the core. As a consequence, leakage losses are not increased. But the profile is not optimized, bending losses being strongly increased.

Example 10 has same refractive index profile as the one of example 2, except the ring which is closer to the core. As a consequence, leakage losses are not increased. But the profile is not optimized, bending losses being strongly increased.

Figure 4 illustrates a manufacturing method that can be used to obtain the fiber of the invention with reduced manufacturing costs.

According to an embodiment, the substrate tube used for deposition process can become the ring of the set profile. The core, first depressed cladding and the depressed trench when needed are obtained by deposition inside a deposition tube. Any CVD technique can be considered, such as PCVD or MCVD or FCVD. If necessary, the substrate tube can be partially removed by an evaporation or etching process to fulfill the optimized dimensions of the ring.

The outer depressed cladding can be composed of a down-doped jacketed or sleeved tube surrounded by a standard outer cladding (tube or over cladding material). In such a case, the outer radius of the chemical vapor deposition section is r$_{ring}$1 (see Figure 4). The quantity of CVD deposition is limited and the cost of the preform is reduced while a large depressed region is obtained.

Compared to profiles without ring (examples 1b, 4b, 8b outside the scope of the invention), the fibers of the invention allow to reduce the F-doped cladding that is deposited inside the substrate tube and to put this substrate tube much closer to the central core, which yields to much larger core-rod diameters and to much lower manufacturing costs.

Notably, the fiber according to the invention allows to reduce the radius of the F-doped cladding that is deposited inside the substrate tube that acts as the ring by more than ~10$\mu$m on fiber compared to a fiber with same central core and without ring. Compared to solutions with a trench added to the depressed inner cladding (such as the one disclosed in EP-A-2 312 350), the fiber of the invention allows to reduce the radius of the deposited F-doped cladding by more than ~5$\mu$m on fiber.

Finally, the bend losses can also be reduced compared to those of a profile without ring, while keeping other propagation characteristics unchanged. Notably, the bend losses can be reduced by more than 2 without penalizing the cable cut-off wavelength.

It should be noted that the present invention is not limited to the embodiments described as examples. In particular, the set profiles shown in figures 2 or 3 are given by way of examples and other manufacturing method than the illustration of figure 4 can be contemplated to obtain the fiber according to the invention.

**Claims**

1. A single mode optical fiber comprising from center to periphery a core, an inner depressed cladding, a ring, an outer depressed cladding and an outer cladding, wherein

   - the core has a radius (a) and a refractive index difference ($Dn_1$) with outer cladding ($Dn_d$) comprised between $-0.5.10^{-3}$ and $0.5.10^{-3}$;
   - the inner depressed cladding has a radius ($r_{ring1}$) and a refractive index difference ($Dn_{inner}$) with outer cladding ($Dn_{cl}$) ;
   - the ring has an inner radius ($r_{ring1}$) comprised between 21 $\mu$m and 35 $\mu$m, preferably between 24 $\mu$m and 35 $\mu$m, an outer radius ($r_{ring2}$) and a refractive index difference ($Dn_{nng}$) with the outer cladding ($Dn_{cl}$) comprised between $-0.5.10^{-3}$ and $0.5.10^{-3}$;
   - the outer depressed cladding has a radius ($r_{out}$) and a refractive index difference ($Dn_{out}$) with outer cladding ($Dn_{cl}$); and
   - a ratio of the volume of the core ($V_{core}$) over the width of the ring ($W_{ring}$) is comprised between 0.12 $\mu$m and 0.2 $\mu$m; wherein $\left(Vcore = 2\pi\left|\int_0^a Dn(r)\,r\,dr\right|\right)$ and ($w_{ring} = R_{ring2} - R_{ring1}$);

   - the outer depressed cladding has a volume ($V_{out}$) comprised between 15 $\mu$m$^2$ and 30 $\mu$m$^2$, wherein $\left(Vout = 2\pi\left|\int_{rring\,2}^{rout} Dn(r)\,r\,dr\right|\right)$.

2. The fiber of claim 1, wherein the core has a radius (a) comprised between 3.5 $\mu$m and 7.5 $\mu$m.

3. The fiber of any one of the preceding claims, wherein the inner depressed cladding has a refractive index difference ($Dn_{inner}$) with outer cladding ($Dn_{cl}$) comprised between $-6.10^{-3}$ and $-2.7.10^{-3}$.

4. The fiber of any one of the preceding claims, wherein the outer depressed cladding has a refractive index difference ($Dn_{out}$) with outer cladding ($Dn_{cl}$) comprised between $-6.10^{-3}$ and $-2.10^{-3}$.

5. The fiber of any one of the preceding claims, wherein the outer depressed cladding has a refractive index difference ($Dn_{out}$) with inner depressed cladding ($Dn_{inner}$) comprised between $-2.10^{-3}$ and $2.10^{-3}$.

6. The fiber of any one of the preceding claims, wherein a ratio of the inner radius of the ring versus the radius of the core ($r_{ring1}$/a) is comprised between 2.5 and 8.

7. The fiber of any one of the preceding claims, wherein the outer depressed cladding has a volume ($V_{out}$) comprised between 17 $\mu$m$^2$ and 25 $\mu$m$^2$

8. The fiber of any one of the preceding claims, further comprising a trench provided in the inner depressed inner cladding, said trench having a refractive index difference ($Dn_3$) with the outer cladding ($Dn_{cl}$), an inner radius (b) and an outer radius (c) being less than the radius ($r_{ring1}$) of the inner depressed cladding.

9. The fiber of any one of the preceding claims, wherein the core and/or the ring is made of pure silica.

10. The fiber of any one of the preceding claims, having leakage losses being less than 0.005 dB/km at 1550nm.

11. The fiber of any one of the preceding claims, having a cable cut-off wavelength being less than 1550 nm, preferably less than 1530 nm, more preferably less than 1260 nm.

12. The fiber of any one of the preceding claims, having bend losses at 10 mm radius of less than 5 dB/m at 1550 nm and less than 10 dB/m at 1625 nm.

13. A method for manufacturing an optical fiber having the features of any one of claims 1 to 12, the method comprising the steps of:

   - providing a deposition tube;
   - performing deposition of layers inside the deposition tube to constitute the core and the inner depressed cladding, the deposition tube constituting the ring;
   - providing the second depressed cladding ;
   - providing the outer cladding, thereby providing an optical preform;
   - drawing the fiber by heating a first end of the preform.

14. The method of claim 13, further comprising a step of partially removing the deposition tube.

15. The method of claim 13 or 14, wherein the second depressed cladding is made by one of the following: sleeving with a doped tube, over cladding with doped silica, outside deposition with doped silica.

**Patentansprüche**

1. Einmodenglasfaser, die vom Mittelpunkt zum Rand einen Kern, einen inneren abgesenkten Mantel, einen Ring, einen äußeren abgesenkten Mantel und einen Außenmantel aufweist, wobei:

   - der Kern einen Radius (a) und einen Brechungsindexunterschied ($Dn_1$) mit dem Außenmantel ($Dn_{cl}$) hat, der zwischen $-0,5.10^{-3}$ und $0,5.10^{-3}$ liegt,
   - der innere abgesenkte Mantel einen Radius ($r_{ring1}$) und einen Brechungsindexunterschied ($Dn_{inner}$) mit dem Außenmantel ($Dn_{cl}$) hat,
   - der Ring einen Innenradius ($r_{ring1}$) zwischen 21 $\mu$m und 35 $\mu$m, vorzugsweise zwischen 24 $\mu$m und 35 $\mu$m, einen Außenradius ($r_{ring2}$) und einen Brechungsindexunterschied ($Dn_{ring}$) mit dem Außenmantel ($Dn_{cl}$) hat, der zwischen $-0,5.10^{-3}$ und $0,5.10^{-3}$ liegt,
   - der äußere abgesenkte Mantel einen Radius ($r_{out}$) und einen Brechungsindexunterschied ($Dn_{out}$) mit dem Außenmantel ($Dn_{cl}$) hat, und

   - ein Verhältnis des Volumens des Kerns ($V_{core}$) zur Breite des Ringes ($W_{ring}$) zwischen 0,12 $\mu$m und 0,2 $\mu$m

   liegt, wobei $\left(Vcore = 2\pi \left| \int_{0}^{a} Dn(r)\, r\, dr \right| \right)$ und ($W_{ring} = R_{ring2} - R_{ing1}$),

   - der äußere abgesenkte Mantel ein Volumen ($V_{out}$) zwischen 15 $\mu$m$^2$ und 30 $\mu$m$^2$ hat, wobei

   $$Vout = 2\pi \left| \int_{rring2}^{rout} Dn(r)\, r\, dr \right|.$$

2. Faser nach Anspruch 1, wobei der Kern einen Radius (a) hat, der zwischen 3,5 $\mu$m und 7,5 $\mu$m liegt.

3. Faser nach einem der vorhergehenden Ansprüche, wobei der innere abgesenkte Mantel einen Brechungsindexunterschied ($Dn_{inner}$) mit dem Außenmantel ($On_{cl}$) hat, der zwischen $-6.10^{-3}$ und $-2,7.10^{-3}$ liegt.

4. Faser nach einem der vorhergehenden Ansprüche, wobei der äußere abgesenkte Mantel einen Brechungsinde-

xunterschied ($Dn_{out}$) mit dem Außenmantel ($On_{cl}$) hat, der zwischen $-6.10^{-3}$ und $-2.10^{-3}$ liegt.

5. Faser nach einem der vorhergehenden Ansprüche, wobei der äußere abgesenkte Mantel einen Brechungsindexunterschied ($Dn_{out}$) mit dem inneren abgesenkten Mantel ($Dn_{inner}$) hat, der zwischen $-2.10^{-3}$ und $2.10^{-3}$ liegt.

6. Faser nach einem der vorhergehenden Ansprüche, wobei ein Verhältnis des Innenradius des Rings gegenüber dem Radius des Kerns ($r_{ring1}/a$) zwischen 2,5 und 8 liegt.

7. Faser nach einem der vorhergehenden Ansprüche, wobei der äußere abgesenkte Mantel ein Volumen ($V_{out}$) hat, das zwischen 17 $\mu m^2$ und 25 $\mu m^2$ liegt.

8. Faser nach einem der vorhergehenden Ansprüche, die ferner einen Einschnitt im inneren abgesenkten Innenmantel aufweist, der einen Brechungsindexunterschied ($Dn_3$) mit dem Außenmantel ($Dn_{cl}$), einen Innenradius (b) und einen Außenradius (c) hat, die kleiner als der Radius ($r_{ring1}$) des inneren abgesenkten Mantels sind.

9. Faser nach einem der vorhergehenden Ansprüche, wobei der Kern und/oder der Ring aus purem Siliziumdioxid hergestellt ist.

10. Faser nach einem der vorhergehenden Ansprüche, die Streuverluste aufweist, die kleiner als 0,005 dB/km bei 1550 nm sind.

11. Faser nach einem der vorhergehenden Ansprüche, die eine Kabel Cut-Off Wellenlänge hat, die kleiner als 1550 nm, vorzugsweise kleiner als 1530 nm, besonders bevorzugt kleiner als 1260 nm ist.

12. Faser nach einem der vorhergehenden Ansprüche, die bei 10 mm Radius Krümmungsverluste von weniger als 5 dB/m bei 1550 nm und von weniger als 10 dB/m bei 1625 nm aufweist.

13. Verfahren zur Herstellung einer Glasfaser mit den Merkmalen einer der Ansprüche 1 bis 12, wobei das Verfahren die folgenden Schritte umfasst:

   - Bereitstellen einer Abscheidungsröhre,
   - Durchführen einer Abscheidung von Schichten innerhalb der Abscheidungsröhre, um den Kern und den inneren abgesenkten Mantel zu bilden, wobei die Abscheidungsröhre den Ring bildet,
   - Bereitstellen des zweiten abgesenkten Mantels,
   - Bereitstellen des Außenmantels, wodurch eine optische Vorform bereitgestellt wird,
   - Ziehen der Faser durch Erhitzen eines ersten Endes der Vorform.

14. Verfahren nach Anspruch 13, das ferner einen Schritt aufweist, bei dem die Abscheidungsröhre teilweise entfernt wird.

15. Verfahren nach Anspruch 13 oder 14, wobei der zweite abgesenkte Mantel durch eines der Folgenden hergestellt ist: Überziehen mit einer dotierten Röhre, Verkleiden mit dotiertem Siliziumdioxid, Außenabscheidung mit dotiertem Siliziumdioxid.

**Revendications**

1. Fibre optique monomodale comprenant du centre à la périphérie une âme, un gainage enfoncé interne, un anneau, un gainage enfoncé externe et un gainage externe, dans laquelle

   - l'âme a un rayon (a) et une différence d'indice de réfraction ($Dn_1$) avec le gainage externe ($Dn_{cl}$) comprise entre $-0,5.10^{-3}$ et $0,5.10^{-3}$ ;
   - le gainage enfoncé interne a un rayon ($r_{ring1}$) et une différence d'indice de réfraction ($Dn_{inner}$) avec le gainage externe ($Dn_{cl}$) ;
   - l'anneau a un rayon interne ($R_{ring1}$) compris entre 21 $\mu m$ et 35 $\mu m$, de préférence entre 24 $\mu m$ et 35 $\mu m$, un rayon externe ($R_{ring2}$) et une différence d'indice de réfraction ($Dn_{ring}$) avec le gainage externe ($Dn_{cl}$) comprise entre $-0,5.10^{-3}$ et $0,5.10^{-3}$;
   - le gainage enfoncé externe a un rayon ($r_{out}$) et une différence d'indice de réfraction ($Dn_{out}$) avec le gainage

externe ($Dn_{cl}$) ; et

- un rapport du volume de l' âme ($V_{core}$) sur la largeur de l'anneau ($W_{ring}$) est compris entre 0, 12 $\mu$m et 0,2

$\mu$m ; où $\left( Vcore = 2\pi \left| \int_{0}^{a} Dn(r)\,dr \right| \right)$ et ($W_{ring} = R_{ring2} - R_{ring1}$) ;

- le gainage enfoncé externe a un volume ($V_{out}$) compris entre 15 $\mu$m$^2$ et 30 $\mu$m$^2$, où

$$\left( Vout = 2\pi \left| \int_{ring\,2}^{rout} Dn(r)\,dr \right| \right).$$

2.  Fibre selon la revendication 1, dans laquelle l'âme a un rayon (a) compris entre 3,5 $\mu$m et 7,5 $\mu$m.

3.  Fibre selon l'une quelconque des revendications précédentes, dans laquelle le gainage enfoncé interne a une différence d'indice de réfraction ($Dn_{inner}$) avec le gainage externe ($Dn_{cl}$) comprise entre $-6.10^{-3}$ et $- 2,7.10^{-3}$.

4.  Fibre selon l'une quelconque des revendications précédentes, dans laquelle le gainage enfoncé externe a une différence d'indice de réfraction ($Dn_{out}$) avec le gainage externe ($Dn_{cl}$) comprise entre $-6.10^{-3}$ et $-2.10^{-3}$.

5.  Fibre selon l'une quelconque des revendications précédentes, dans laquelle le gainage enfoncé externe a une différence d'indice de réfraction ($Dn_{out}$) avec le gainage enfoncé interne ($Dn_{inner}$) comprise entre $-2.10^{-3}$ et $2.10^{-3}$.

6.  Fibre selon l'une quelconque des revendications précédentes, dans laquelle un rapport du rayon interne de l'anneau par rapport au rayon de l' âme ($r_{ring1}/a$) est compris entre 2,5 et 8.

7.  Fibre selon l'une quelconque des revendications précédentes, dans laquelle le gainage enfoncé externe a un volume ($V_{out}$) compris entre 17 $\mu$m$^2$ et 25 $\mu$m$^2$.

8.  Fibre selon l'une quelconque des revendications précédentes, comprenant en outre une tranchée disposée dans le gainage enfoncé interne, ladite tranchée ayant une différence d'indice de réfraction ($Dn_3$) avec le gainage externe ($Dn_{cl}$), un rayon interne (b) et un rayon externe (c) qui est inférieur au rayon ($r_{ring1}$) du gainage enfoncé interne.

9.  Fibre selon l'une quelconque des revendications précédentes, dans laquelle l'âme et/ou l'anneau sont constitués de silice pure.

10. Fibre selon l'une quelconque des revendications précédentes, ayant des pertes de fuite de moins de 0,005 dB/km à 1 550 nm.

11. Fibre selon l'une quelconque des revendications précédentes, ayant une longueur d'onde de coupure de câble de moins de 1 550 nm, de préférence de moins de 1 530 nm, de manière davantage préférée de moins de 1 260 nm.

12. Fibre selon l'une quelconque des revendications précédentes, ayant des pertes dues à la courbure à 10 mm de rayon de moins de 5 dB/m à 1 550 nm et de moins de 10 dB/m à 1 625 nm.

13. Procédé de fabrication d'une fibre optique ayant les particularités de l'une quelconque des revendications 1 à 12, le procédé comprenant les étapes de :

    - fourniture d'un tube de dépôt ;
    - réalisation d'un dépôt de couches à l'intérieur du tube de dépôt pour constituer l'âme et le gainage enfoncé interne, le tube de dépôt constituant l'anneau ;
    - fourniture du second gainage enfoncé ;

- fourniture du gainage externe, fournissant ainsi une préforme optique ;
- tirage de la fibre par chauffage d'une première extrémité de la préforme.

**14.** Procédé selon la revendication 13, comprenant en outre une étape d'enlèvement partiel du tube de dépôt.

**15.** Procédé selon la revendication 13 ou 14, dans lequel le second gainage enfoncé est constitué par l'un des éléments suivants : chemisage avec un tube dopé, surgainage avec de la silice dopée, dépôt extérieur avec de la silice dopée.

Figure 1

Figure 2

Figure 3

Radius on fiber (µm)

Figure 4

Radius on fiber (µm)

EP 2 533 082 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US RE30635 E
- US 4314833 A
- EP 2312350 A
- US 20080031582 A
- US 5044724 A
- WO 2010003856 A
- US 20070003198 A
- EP 2003476 A